# DEMANDE DE BREVET EUROPEEN

(11) **EP 3 747 270 A1**
(43) Date de publication de la demande: **09.12.2020**
(21) Numéro de dépôt: 20177778.6
(22) Date de dépôt: 02.06.2020
(51) Int. Cl.: A22C 29/02

(54) **PROCÉDÉ DE PRÉPARATION DE CHAIR DE CRABES**

(30) Priorité: 05.06.2019 FR 1905969
(71) Demandeur: Didelot, Yann, 56700 Merlevenez (FR)
(72) Inventeur: Didelot, Yann, 56700 Merlevenez (FR)
(74) Mandataire: Eveillard, Sophie

(57) **Abrégé**

La présente invention vise un procédé de préparation de chair de crabes comprenant au moins les étapes suivantes, dans cet ordre :
i) disposer d'un produit à traiter comprenant de la chair et des fragments de carapaces, de cartilage, de pinces et de pattes de crabes ;
ii) procéder à une étape de séparation entre la chair de crabes et les fragments mettant en oeuvre un séparateur à bande, ledit séparateur à bande comprenant une bande de serrage et un tambour perforé ;
iii) procéder à une étape de séparation entre la chair de crabes et les fragments par flottation pendant une durée allant de 1 à 150 secondes, de préférence de 20 à 90 secondes et de manière préférée de 30 à 60 secondes dans une solution aqueuse comprenant du sel en une concentration allant de 150 à 360 g/l ;
iv) récupérer la chair de crabe.

## Description

La présente invention se rapporte au domaine des procédés de transformation des crabes et plus particulièrement de préparation de chair de crabes.

La préparation de chair de crabes propre à la consommation est une activité généralement fastidieuse qui requiert du temps, de la force, de l'habileté et du savoir-faire. L'industrie de transformation des crustacés, ainsi que les commerces, restaurants qui proposent des crustacés à la vente ont des besoins importants en personnel compétent pour la préparation de la chair de crustacés. Il a ainsi été estimé que la main d'œuvre peut représenter jusqu'à 80% du prix de vente d'un crabe tourteau dans un restaurant. Il a également été constaté que la patience nécessaire pour décortiquer un crustacé conduit certains consommateurs à avoir recours à des produits dans lesquels la chair est directement disponible.

Par ailleurs, la quantité annuelle des crustacés pêchés et non vendus n'est pas négligeable. Ce gaspillage est regrettable aussi bien au point de vue écologique qu'économique.

Le problème à l'origine de la présente invention est de proposer une voie de valorisation des crabes différente et complémentaire de la vente directe des crabes entiers, sous la forme d'un procédé de préparation de chair de crabe compétitif en termes de volumes traités et permettant l'obtention de chair de crabe correspondant au goût et à l'aspect recherché par le consommateur.

Des procédés de préparation de chair de crabes utilisant un sytème de tamisage ont déjà été proposés notamment dans le brevet US 5154662 qui décrit un ensemble de rouleaux perforés permettant le passage de la chair de crabe. Est également connu de GB551674 un procédé utilisant une saumure pour séparer la chair des coquilles de mollusques. Le document « Optimization of a Brine Séparation Tank » de Steven Seiden, URL:https://p2infohouse.org/ref/19/18694.pdf, décrit un procédé d'obtention de chair de crabes à partir des pinces, ce procédé comprenant une étape dans laquelle les pinces sont broyées au moyen d'un broyeur à marteaux suivie d'une étape de séparation par immersion dans une saumure.

Il demeure cependant toujours un besoin d'un procédé de valorisation de l'intégralité des crustacés et notamment des corps, simple à mettre en œuvre, qui conduise à l'obtention de chairs de crabes contenant très peu voire pas de fragments de parties dures de crabes et présentant un aspect et des qualités organoleptiques très satisfaisants.

De manière surprenante et avantageuse l'inventeur de la présente invention est parvenu à surmonter les problèmes de l'art antérieur et à proposer un procédé de préparation de chair de crabes simple à mettre en œuvre, qui ne requiert pas de matériel particulièrement coûteux ou dangereux. Ledit procédé permet de transformer les volumes de matières premières disponibles à l'issue d'une sortie en mer d'un navire dans un délai acceptable au point de vue industriel et permettant de limiter les risques de contaminations bactériologiques. Ce procédé peut en outre être mis en œuvre sans avoir recours à une consommation d'eau excessive.

Le procédé selon la présente invention permet d'atteindre un rendement pondéral en chair de crabe, par rapport au crabe entier, très satisfaisant puisqu'il est d'au moins 10%. Ce rendement peut être très supérieur en fonction notamment de la taille des crabes pêchés et aussi de la saison de pêche. En effet, il est connu que la proportion en chair d'un crabe varie en fonction de divers paramètres tels que le type de crabe, la taille des crabes et aussi le moment c'est-à-dire la saison de la pêche. En outre la chair de crabes obtenue selon le procédé suivant la présente invention ne contient substantiellement pas de résidus de carapaces ou de cartilage.

Le procédé selon la présente invention permet de conserver les qualités gustatives et nutritionnelles de la chair de crabes et permet également l'obtention d'un produit visuellement attractif : la chair de crabes se présente sous la forme de morceaux de texture fibreuse et non sous la forme d'un amalgame de consistance pâteuse.

La chair de crabe obtenue suivant le procédé selon l'invention peut être utilisée dans des préparations culinaires pouvant prétendre à l'appellation " Chair d'araignée" ou "Chair de crabe tourteau" selon la matière première utilisée. Le procédé selon la présente invention permet l'obtention de chairs de crabes aptes à être utilisées dans des préparations telles que des produits préparés frais, des plats surgelés, des conserves, notamment pour la fabrication de rillettes, terrines, salades. Le procédé selon l'invention permet l'obtention de chair de crabe apte à la conservation. La chair de crabes obtenue peut notamment être conservée pendant une durée allant jusqu'à 18 mois à -18°C ou pendant une durée allant jusqu'à 4 ans après appertisation.

D'autres aspects, avantages, propriétés de la présente invention sont présentés dans la description et les exemples qui suivent.

La présente invention a pour objet un procédé de préparation de chair de crabes comprenant au moins les étapes suivantes, dans cet ordre :
i) disposer d'un produit à traiter comprenant de la chair de crabes et des fragments de carapaces, de cartilage, de pinces et de pattes de crabes ;
ii) procéder à une étape de séparation entre la chair de crabes et les fragments mettant en oeuvre un séparateur à bande, ledit séparateur à bande comprenant une bande de serrage et un tambour perforé ;
iii) procéder à une étape de séparation entre la chair de crabes et les fragments par flottation pendant une durée allant de 1 à 150 secondes, de préférence de 20 à 90 secondes et de manière préférée de 30 à 60 secondes dans une solution aqueuse comprenant du sel en une concentration allant de 150 à 360 g/l, de préférence allant de 300 à 360 g/l et de manière préférée 360 g/l ;
iv) récupérer la chair de crabe.

Au sens du présent texte, on entend par :
- « crabes » : les araignées de mer, les tourteaux encore appelés dormeurs et également les étrilles et les crabes verts, de préférence les araignées de mer (*Maja brachydactyla, Maja sqinado*) et les tourteaux (*Cancer pagurus*) ;
- « chair de crabes » : les parties molles, comestibles des crabes, la chair de crabes comprend la chair du corps, des pinces et des pattes, principalement du corps;
- « parties dures des crabes » : la carapace -composée de chitine-, le cartilage, les pinces et pattes de crabes ainsi que les fragments de carapace, de cartilage, de pinces et de pattes de crabes, les parties dures de crabes ne sont pas comestibles ;
- « fragments » : les morceaux dont la plus grande dimension va de 0,5 mm à 30 mm;
- « partie supérieure des crabes » : l'ensemble de la carapace et des branchies ;
- « produit à traiter » : l'ensemble de la chair notamment du corps et des fragments de carapaces, de cartilage, des pinces et de pattes de crabes ; le produit à traiter correspond aux crabes dont la partie supérieure a été rétirée. Lors du retrait de la partie supérieure des crabes, des fragments de carapaces sont souvent cassés, une partie de ces fragments peut échapper à la vigilance de l'opérateur et rester dans le produit à traiter.

Comme déjà mentionné, le procédé selon la présente invention comprend en particulier les deux étapes suivantes, dans cet ordre :
une étape ii) de séparation de la chair de crabes mettant en oeuvre un séparateur à bande et une étape iii) de séparation de la chair de crabes par flottation. Ces deux étapes permettent la séparation entre d'une part la chair de crabe et d'autre part les fragments de carapaces, de cartilage, de pinces et de pattes de crabes.

La première étape de séparation est effectuée au moyen d'un séparateur à bande. Par « séparateur à bande » au sens de la présente invention, on entend un dispositif comprenant un tambour rotatif perforé et une bande de serrage entourant au moins une partie du tambour, la bande de serrage étant apte à se positionner au contact de ladite partie du tambour. De tels séparateurs à bande sont connus dans le domaine agroalimentaire, ils sont notamment décrits dans les demandes de brevet CA 2 670 245 A1 et FR 3 060 946 A1. La bande de serrage est en général une bande souple formée en un matériau tel que le néoprène ou le polyuréthane. La bande de serrage est disposée à l'extérieur du tambour et elle est apte à venir exercer une pression sur au moins une partie de la surface externe du tambour.

Lors de la mise en fonction du séparateur à bande, le produit à traiter est introduit dans le dispositif dans une zone située entre le tambour et la bande de serrage. La bande de serrage est apte à diriger le produit à traiter au contact de la surface externe du tambour et à presser ledit produit à traiter contre ladite suface externe de manière à faire passer les parties molles au travers des perforations du tambour, l'essentiel des parties dures de crabes, en particulier l'essentiel des fragments issus des carapaces, du cartilage, des pinces et des pattes de crabes étant retenu sur la surface externe du tambour. Bien entendu, des fragments de parties dures de petite taille, c'est-à-dire des fragments de taille inférieure au diamètre des perforations du tambour, peuvent passer au travers des perforations du tambour avec la chair de crabes.

La pression de séparation -qui correspond à la tension de la bande de serrage- est réglable. Il relève des compétences de l'homme du métier de déterminer la pression à exercer pour séparer les parties molles des parties dures. De manière générale, la bande de serrage du séparateur à bande est apte à exercer une pression hydraulique allant de 5 à 25 bar, de préférence allant de 10 à 20 bar et de manière préférée de15 bar à 20 bar sur le produit à traiter.

Avantageusement, un couteau racleur est utilisé pour racler la surface extérieure du tambour et ôter les parties dures de crabes. A titre d'exemple de séparateurs à bande, on peut citer le séparateur commercialisé par la société Baader® sous la dénomination commerciale Baader 601 ou par la société SEPAMATIC® sous la dénomination commerciale SEPAmatic 1200 ou 1400.

Le diamètre des perforations du tambour est judicieusement choisi de manière à laisser passer, au travers des perforations, des morceaux de chair de crabes dont la taille a été déterminée au préalable. La taille des morceaux de chair de crabes dépend de la préparation culinaire visée, généralement la longueur des morceaux de chair de crabes va de 3 à 15 mm. Bien entendu, les parties dures de crabes en particulier de taille inférieure ou égale au diamètre des perforations du tambour peuvent également traverser lesdites perforations. De manière préférée, le tambour perforé du séparateur à bande comprend des perforations de diamètre allant de 1,3 à 7 mm, de préférence de 2,5 à 6 mm, de manière préférée de 3 à 5 mm et tout préférentiellment d'environ 5 mm.

En outre, le séparateur à bande peut être muni d'un système de pré-concassage permettant de fragmenter les parties dures de crabes avant leur introduction dans le séparateur à bande. Le système de concassage peut consister en deux rotors porte-couteaux à rotation inverse aptes à happer et briser les parties dures de crabes.

L'étape de séparation au moyen d'un séparateur à bande est suivie par une étape de séparation par flottation. La flottation est une technique de séparation basée sur la différence de densité entre les éléments à séparer c'est-à-dire entre les morceaux de chair de crabes et les fragments de parties dures de crabes résiduels, c'est-à-dire qui n'ont pas été éliminés à l'étape de séparation précédente, qui coulent. Dans les conditions particulières de l'invention, les morceaux de chair de crabes flottent tandis que les fragments de parties dures coulent.

La solution utilisée à l'étape de flottation du procédé selon la présente invention est une solution aqueuse salée, ou saumure, comprenant de l'eau et du sel, dont la concentration en sel va de 150 à 360 g/l, de préférence de 300 à 360 g/l et de manière préférée 360 g/l. C'est-à dire que du sel en une quantité allant de 150 à 360 g, de préférence de 300 à 360 g et de manière préférée 360 g par litres d'eau est ajoutée. Bien entendu, le sel utilisé est de qualité alimentaire, de préférence le sel utilisé est le chlorure de sodium (NaCI). A la concentration de 360 g/l en sel, la solution est à l'état saturé, par conséquent l'ajout de sel au-delà de cette concentration conduit à une solution sursaturée qui ne présente aucun avantage technique supplémentaire par rapport à une solution saturée.

La durée de l'étape de séparation par flottation va de 1 à 150 secondes, de préférence de 20 à 90 secondes et de manière préférée de 30 à 60 secondes. Un temps de résidence trop long peut conduire à un produit trop salé et de consistance, texture altérée.

La concentration en sel de la solution aqueuse et le temps de résidence de la chair de crabe dans la saumure sont particulièrement importants pour permettre à la fois une séparation satisfaisante de la chair de crabe - contenant un taux négligeable de fragments de parties dures de crabes- et des qualités organoleptiques satisfaisantes notamment un produit qui ne soit pas trop salé ni pâteux.

Da manière préférée, la solution aqueuse, salée est introduite de manière continue dans le récipient où est réalisée l'étape de flottation et elle est bien entendu également évacuée de manière continue. La solution est ainsi introduite selon un flux laminaire ou cyclonique générant une légère agitation de ladite solution, cette agitation contribue également à l'efficacité de la séparation. Ainsi l'étape de séparation par flottation est effectuée sous agitation, à une vitesse d'agitation allant de 0,2 à 2 m/s et de préférence de 0,5 m/s. De préférence, l'étape de séparation par flottation est effectuée sous agitation selon un flux laminaire.
A titre d'exemple d'appareil pour mettre en œuvre l'étape de flottation, on peut citer les appareils de type épierreurs cycloniques ou les laveurs vendus sous la marque Polywash ® par la société LE LEZ PROCESS MAROC.

La combinaison des étapes de séparation au moyen d'un séparateur à bande et par flottation réalisées dans les conditions particulières de l'invention permet l'obtention de chairs de crabes présentant les qualités requises, notamment en termes de densité dans la saumure, pour une élimination efficace des fragments durs de crabes tout en présentant les propriétés organoleptiques notamment en termes de goût et de texture attendues par le consommateur.

### Etapes préalables aux étapes de séparation de la chair de crabes

Le procédé selon la présente invention comprend avantageusement au moins une étape de traitement des crabes, préalable à l'étape i).

Le procédé selon la présente invention comprend avantageusement une étape de retrait des carapaces de crabes et éventuellement des branchies, préalable à l'étape i). Cette étape, qui vise à éliminer la partie supérieure des crabes est également appelée « décoffrage ». L'élimination des carapaces, qui correspond à la partie la plus dure des crabes permet de faciliter les étapes suivantes de séparation de la chair. Cette étape peut être effectuée manuellement, ou de manière semi mécanique. Elle est généralement effectuée au moyen d'un percuteur. Cette étape qui permet de retirer l'essentiel des carapaces, génère cependant des fragments qui ne sont pas éliminés et restent dans le produit à traiter. Les branchies peuvent être éliminées au moyen d'une brosse rotative associée à un jet d'eau. Lors de cette étape, la poche contenant les œufs, située sous l'abdomen, peut également être éliminée.

En outre, le procédé selon la présente invention comprend de préférence également une étape de retrait des pattes, préalable à l'étape i).

Avantageusement, le procédé selon l'invention comprend une étape de cuisson des crabes précédant l'étape i) et, si présente, précédant l'étape de retrait des carapaces et si présente, précédant l'étape de retrait des pattes. Cette étape peut être effectuée de manière continue ou discontinue. Cette étape est généralement effectuée avec de l'eau bouillante à une temperature d'environ 95°C. L'étape de cuisson peut également être effectuée à la vapeur d'eau sous pression, c'est-à-dire de l'eau portée à une temperature supérieure à 100°C, de préférence allant de 110°C à 143°C et une pression relative de 1 à 4 bar. L'eau utilisée pour la cuisson peut également comprendre au moins un aromate notamment choisi dans le groupe constitué par le sel, le poivre, le thym, le citron, le laurier, les clous de girofle. De préférence la durée de l'étape de cuisson va de 10 à 30 minutes, avantageusement de 20 à 25 minutes notamment pour une cuisson à l'eau bouillante.

Selon une variante préférée, le liquide obtenu à l'issue de la cuisson, encore appelé jus de cuisson, est récupéré et avantageusement refroidi.

Avantageusement, le procédé selon l'invention comprend une étape de refroidissement des crabes précédant l'étape i) et, si présente, précédant l'étape de retrait des carapaces, et si présente, précédant l'étape de des pattes, et, si présente, précédant l'étape de cuisson. L'étape de refroidissement des crabes est effectuée à une température allant de 0 à 4°C, pendant une durée allant de 10 à 30 minutes, avantageusement d'environ 20 minutes. Cette étape également nommée "étape d'engourdissement au froid" peut être effectuée dans une cellule de refroidissement ou en chambre froide, elle peut aussi être mise en oeuvre dans un récipient rempli de glace.

Ainsi avantageusement, le procédé selon l'invention comprend les étapes suivantes, dans cet ordre, précédant l'étape i) : une étape de refroidissement des crabes puis une étape de cuisson puis une étape de retrait des carapaces et éventuellement des pattes.

### Etapes postérieures aux étapes de séparation de la chair de crabes

Avantageusement, le procédé selon la présente invention comprend, après l'étape iii), une étape de rinçage de la chair de crabe.

Selon une variante préférée, le jus de cuisson des crabes est récupéré à l'issue de l'étape de cuisson précédant l'étape i) et l'étape de rinçage de la chair de crabe est effectuée au moyen dudit jus de cuisson. Avantageusement, le jus de cuisson est refroidi à une température allant de 2 à 6°C, avantageusement 4°C. Cette variante permet en outre, au besoin, d'améliorer encore les qualités gustatives de la chair de crabes. Elle permet également de réduire la cosommation d'eau.

Selon une autre variante, le procédé selon la présente invention comprend au moins une étape d'égouttage mise en oeuvre avant et/ou après l'étape de rinçage. De préférence, le procédé selon la présente invention comprend au moins une étape d'égouttage avant l'étape de rinçage et au moins une étape d'égouttage après l'étape de rinçage. De manière préférée, le procédé comprend au moins une étape d'égouttage mise en œuvre après l'étape de rinçage, effectuée par pressage de la chair de crabe. Il relève des compétences de l'homme du métier d'effectuer un pressage d'intensité adéquate à l'obtention de chair de crabe présentant le taux d'humidité requis. Les étapes d'égouttage peuvent être mises en œuvre au moyen d'un tapis d'égouttage au seuil de coupure de 250 µm soit 250 x10⁻⁶ m.

Selon une autre variante, préférée, le procédé selon la présente invention comprend au moins une étape de stérilisation de la chair de crabe obtenue à l'issue de l'étape iv). Avantageusement cette étape est effectuée par chauffage à une température allant de 113°C à 115°C pendant 10 à 50 minutes de préférence 10 à 20 minutes.

Ainsi avantageusement, le procédé selon l'invention comprend les étapes suivantes, dans cet ordre, suivant l'étape iii) : une étape d'égouttage de la chair de crabe, une étape de rinçage, une étape d'égouttage par pressage, une étape iv) de récupération de la chair de crabe, une étape de stérilisation.

La chair de crabe obtenue se présente sous la forme de morceaux dont la dimension la plus grande va de 3 à 15 mm, elle ne se présente pas sous la forme d'un produit pâteux. La chair de crabe peut être conservée et utilisée dans des préparations culinaires.

Les exemples qui suivent visent à illustrer l'invention sans en limiter la portée.

### Exemples

### Exemple 1 Conforme à l'invention

10 kg de crabes de type araignées de mer (*Maja brachydactyla*) sont collectés puis engourdis au froid à 2°C pendant 20 minutes avant d'être cuits. La cuisson est effectuée dans 5 volumes d'eau salée (3.5% de NaCI) à 95°C pendant 25 minutes. Les carapaces, les œufs et les branchies sont ensuite retirés à l'aide d'un percuteur et d'une brosse. L'eau de cuisson est récupérée et refroidie à 4°C.

L'étape de séparation mécanique est effectuée avec un séparateur à bande Baader 694 avec une bande de serrage réglée pour appliquer une pression hydraulique de 15 bar sur le tambour perforé de perforations de diamètre 3 mm. Les fragments de carapace restés sur la surface extérieure du tambour sont éliminés au couteau-racloir. La chair de crabe est récupérée et convoyée vers le dispositif de séparation par flottation.

L'étape de séparation par flottation est effectuée au moyen d'un dispositif de type épierreur cyclonique en utilisant une solution d'eau salée de concentration en NaCI de 300 g/l. La durée de l'étape de séparation par flottation est de 60 secondes à la vitesse de rotation des pales de 176 t / min (soit 2 m/s en moyenne sur le produit).

La chair de crabe récupérée est égouttée, rincée deux fois à l'eau froide puis est soumise à un égouttage par léger pressage réalisé manuellement sur tamis à mailles de 250 µm. Selon une variante préférée, la chair de crabe récupérée est égouttée, rincée deux fois avec l'eau de cuisson récupérée et refroidie, puis est soumise à un égouttage par léger pressage réalisé manuellement sur tamis à mailles de 250 µm, cette variante conduit à un produit présentant un goût plus prononcé.

Enfin la chair de crabe obtenue est stérilisée par chauffage à une température de 113°C pendant 20 minutes puis stockée.

### Exemple 2 Conforme à l'invention

25 kg de crabes de type araignées de mer (*Maja brachydactyla*) sont collectés puis engourdis au froid à 2°C pendant 20 minutes avant d'être cuits. La cuisson est effectuée dans 5 volumes d'eau salée (3.5% de NaCl) à 95°C pendant 25 minutes. Les carapaces, les œufs et les branchies sont ensuite retirés à l'aide d'un percuteur et d'une brosse. L'eau de cuisson est récupérée et refroidie à 4°C.

L'étape de séparation mécanique est effectuée avec un séparateur à bande Baader 694 avec une bande de serrage réglée pour appliquer une pression hydraulique 20 bar sur le tambour perforé de perforations de diamètre 5 mm. Les fragments de carapace restés sur la surface extérieure du tambour sont éliminés au couteau-racloir. La chair de crabe est récupérée et convoyée vers le dispositif de séparation par flottation.

L'étape de séparation par flottation est effectuée au moyen d'un dispositif de type epierreur cyclonique en utilisant une solution d'eau salée de concentration en NaCI de 360 g/l. La durée de l'étape de séparation par flottation est de 30 secondes à la vitesse de rotation de 176 t / min.

La chair de crabe récupérée est égouttée, rincée deux fois à l'eau froide puis est soumise à un égouttage par léger pressage réalisé manuellement sur tamis à mailles de 250 µm. Selon une variante préférée, la chair de crabe récupérée est égouttée, rincée deux fois avec l'eau de cuisson récupérée et refroidie, puis est soumise à un égouttage par léger pressage réalisé manuellement sur tamis à mailles de 250 µm, cette variante conduit à un produit présentant un goût plus prononcé.

Enfin la chair de crabe obtenue est stérilisée par chauffage à une température de 115°C pendant 15 minutes puis stockée.

Les produits obtenus en mettant en œuvre les procédés des exemples 1 et 2 présentent des teneurs en fragments de carapaces inférieure à 2% en poids par rapport au poids total du produit obtenu, soit plus de 98% en poids de chair de crabes. Ces fragments sont de taille inférieure à 1,5 mm.

### Exemple 3 Comparatif

10 kg de crabes de type araignées de mer (*Maja brachydactyla*) sont collectés puis engourdis au froid à 2°C pendant 20 minutes avant d'être cuits. La cuisson est effectuée dans 5 volumes d'eau salée (3.5% de NaCl) à 95°C pendant 25 minutes. Les carapaces, les œufs et les branchies sont ensuite retirés à l'aide d'un percuteur et d'une brosse.

L'étape de séparation mécanique est effectuée au moyen d'un séparateur à vis sans fin mobile et filière fixe de dénomination commerciale AM2C modèle SM 208. Ce séparateur comprend une trémie d'alimentation dans laquelle le produit à traiter est introduit. Le produit à traiter est ensuite transporté par une vis d'alimentation jusque dans une filière perforée de trous constituant un tamis de 3 mm.

Lors de la mise en œuvre de cette étape de séparation, on a observé que le produit à traiter - chair de crabes et fragments de carapace- tend à former un bouchon au niveau du cône d'évacuation des déchets qui conduit à l'arrêt du séparateur à vis.

Une petite quantité de chair de crabe a été récupérée après le tamis. Elle présentait un aspect plus haché, plus pâteux. De plus il apparait que la chair a été partiellement cuite lors de l'échauffement précédent la formation du bouchon.

La chair de crabe a été convoyée vers le dispositif de séparation par flottation, cependant il n'a pas été possible de réaliser une séparation par flottation à partir de cet amalgame de chair de crabe cuite.

### Exemple 4 Comparatif

5 kg de crabes de type araignées de mer (*Maja brachydactyla*) sont collectés puis engourdis au froid à 2°C pendant 20 minutes avant d'être cuits. La cuisson est effectuée dans 5 volumes d'eau salée (3.5% de NaCl) à 95°C pendant 25 minutes. Les carapaces, les œufs et les branchies sont ensuite retirés à l'aide d'un percuteur et d'une brosse.

L'étape de séparation mécanique est réalisée dans les même conditions que l'exemple 1.

L'étape de séparation par flottation est effectuée au moyen d'un dispositif de type épierreur cyclonique en utilisant une solution salée de concentration en NaCl de 100 g/l. La durée de l'étape de séparation par flottation est de 120 secondes à la vitesse de 176 t /min.

La chair de crabe récupérée est égouttée, rincée deux fois à l'eau froide puis est soumise à un égouttage par léger pressage réalisé manuellement sur tamis à mailles de 250 µm.

La chair de crabe obtenue à l'exemple 4 contient un taux de fragments de carapaces supérieur à 5 % en poids, ces fragments (taille des fragments 2 à 3 mm) sont détectables à l'œil nu.

Le tableau 1 présente le rendement pondéral en chair de crabes obtenu avec chacun des procédés des exemples 1 à 4 c'est-à-dire le poids de chair de crabes obtenu par rapport au poids de crabes traités.

**[Tableau 1]**

| | Exemple 1 Conforme | Exemple 2 Conforme | Exemple 3 Comparatif | Exemple 4 Comparatif |
|---|---|---|---|---|
| Poids de départ (g) | 10000 | 25000 | 10000 | 5000 |
| Poids après cuisson | 9400 | 23800 | 9400 | 4700 |
| Poids des carapace et œufs (décoffrage) | 5900 | 14500 | 5850 | 2950 |
| Poids de chair après séparation mécanique | 2700 | 6040 | 1200 | 1350 |
| Poids de chair après séparation par flottation | 1500 | 4800 | 0 | 405 |
| **Rendement** | **15%** | **19,20%** | **-** | **8,10%** |

Les procédés des exemples 1 et 2 conformes à l'invention permettent l'obtention d'un rendement très satisfaisant. Ce qui n'est pas le cas avec les procédés comparatifs 3 et 4 : le procédé selon l'exemple 3 conduit à l'obtention de chair de crabe cuite qui n'est pas séparable par flottation et le procédé selon l'exemple 4 contient un taux non négligeable de fragments de carapaces.

### Exemple 5 Conforme à l'invention

L'exemple 5 correspond à l'exemple 1 conforme présenté ci-dessous, à la différence que l'étape de séparation par flottation est effectuée au moyen d'un dispositif type laveur Polywash ®, mettant en œuvre une agitation selon un flux laminaire de 0,5 m/s. Ce procédé permet d'améliorer le rendement matière global de 2%.

### Exemple 6 Conforme à l'invention

L'exemple 6 correspond à l'exemple 2 conforme présenté ci-dessous, à la différence que l'étape de séparation par flottation est effectuée au moyen d'un dispositif type laveur Polywash ®, mettant en œuvre une agitation selon un flux laminaire de 1 m/s. Ce procédé permet d'améliorer le rendement de matière global de 1%.

## Revendications

1. Procédé de préparation de chair de crabes **caractérisé en ce qu'**il comprend au moins les étapes suivantes, dans cet ordre :
i) disposer d'un produit à traiter comprenant de la chair de crabes et des fragments de carapaces, de cartilage, de pinces et de pattes de crabes ;
ii) procéder à une étape de séparation entre la chair de crabes et les fragments mettant en oeuvre un séparateur à bande, ledit séparateur à bande comprenant une bande de serrage et un tambour perforé ;
iii) procéder à une étape de séparation entre la chair de crabes et les fragments par flottation pendant une durée allant de 1 à 150 secondes, de préférence de 20 à 90 secondes et de manière préférée de 30 à 60 secondes dans une solution aqueuse comprenant du sel en une concentration allant de 150 à 360 g/l ;
iv) récupérer la chair de crabe.

2. Procédé selon la revendication 1 dans lequel la solution aqueuse comprend du sel en une concentration allant de 300 à 360 g/l et de manière préférée 360 g/l.

3. Procédé selon la revendication 1 ou 2 dans lequel la bande de serrage du séparateur à bande est apte à exercer une pression hydraulique allant de 5 à 25 bar, de préférence allant de 10 à 20 bar et de manière préférée de15 bar à 20 bar sur le produit à traiter.

4. Procédé selon l'une quelconque des revendications 1 à 3 dans lequel le tambour perforé du séparateur à bande comprend des perforations de diamètre allant de 1,3 à 7 mm, de préférence de 2,5 à 6 mm.

5. Procédé selon la revendication précédente dans lequel le tambour perforé du séparateur à bande comprend des perforations de diamètre allant de 3 à 5 mm et de manière préférée d'environ 5 mm.

6. Procédé selon l'une quelconque des revendications précédentes **caractérisé en ce que** l'étape de séparation par flottation est effectuée sous agitation, à une vitesse d'agitation allant de 0,2 à 2 m/s et de préférence de 0,5 m/s.

7. Procédé selon la revendication précédente caractérisé en ce l'étape de séparation est effectuée sous agitation selon un flux laminaire.

8. Procédé selon l'une quelconque des revendications précédentes **caractérisé en ce qu'**il comprend une étape de retrait des carapaces de crabes et éventuellement des branchies, préalable à l'étape i).

9. Procédé selon l'une quelconque des revendications précédentes **caractérisé en ce qu'**il comprend une étape de retrait des pattes, préalable à l'étape i).

10. Procédé selon l'une quelconque des revendications précédentes **caractérisé en ce qu'**il comprend une étape de cuisson des crabes précédant l'étape i) et, si présente, précédant l'étape de retrait des carapaces et, si présente, précédant l'étape de retrait des pattes, de préférence la durée de l'étape de cuisson va de 10 à 30 minutes, avantageusement de 20 à 25 minutes.

11. Procédé selon l'une quelconque des revendications précédentes **caractérisé en ce qu'**il comprend une étape de refroidissement des crabes précédant l'étape i) et, si présente, précédant l'étape de retrait des carapaces et, si présente, précédant l'étape de retrait des pattes, et, si présente, précédant l'étape de cuisson, de préférence le refroidissement est effectué à une temperature allant de 0 à 4°C, pendant une durée allant de 10 à 30 minutes, avantageusement environ 20 minutes.

12. Procédé selon l'une quelconque des revendications précédentes **caractérisé en ce qu'**il comprend, après l'étape iii), une étape de rinçage de la chair de crabe.

13. Procédé selon la revendication précédente, comprenant une étape de cuisson des crabes selon la revendication 10, **caractérisé en ce que** le jus de cuisson des crabes est récupéré à l'issue de l'étape de cuisson et que l'étape de rinçage de la chair de crabe est effectuée au moyen dudit jus de cuisson.

14. Procédé selon la revendication 12 ou 13 **caractérisé en ce qu'**il comprend au moins une étape d'égouttage avant et/ou après l'étape de rinçage, de préférence au moins une étape d'égouttage après l'étape de rinçage, ladite étape d'égouttage étant effectuée par pressage de la chair de crabes.

15. Procédé selon l'une quelconque des revendications précédentes **caractérisé en ce qu'**il comprend une étape de stérilisation de la chair de crabe obtenue à l'issue de l'étape iv).
